# EUROPEAN PATENT SPECIFICATION

(11) **EP 0 408 582 B1**
(45) Date of publication and mention of the grant of the patent: **19.04.1995**
(21) Application number: 89902881.5
(22) Date of filing: 08.02.1989
(51) Int. Cl.: H01H 1/52, H02G 3/16

(54) **TELEPHONE JUNCTION BOX AND SWITCH THEREFOR**
FERNSPRECHER-VERBINDUNGSDOSE SOWIE SCHALTER DAFÜR
BOITE DE JONCTION TELEPHONIQUE ET COMMUTATEUR PREVU A CET EFFET

(30) Priority: 08.02.1988 US 153188; 02.05.1988 US 189087
(43) Date of publication of application: 23.01.1991
(73) Proprietor: RAYCHEM CORPORATION, Menlo Park California 94025 (US)
(72) Inventor: JERVIS, James, Atherton, CA 94025 (US)
(74) Representative: Hall, Robert Leonard
(86) International application number: US8900499
(87) International publication number: WO8907326

(56) References cited:
- DE-B- 1 108 270
- DE-B- 2 816 776
- FR-A- 2 250 191
- US-A- 2 499 958
- US-A- 3 294 927
- US-A- 4 435 034
- US-A- 4 645 285

## Description

### Background of the Invention

This invention relates to devices for example a socket and a telephone junction box for interconnecting telephone wires, particularly subscriber drop wires. In particular, the invention allows for circuit testing both of the circuit from the box to the subscriber and of the circuit from the box to the central office. The invention may also be used in distribution cabinets and other places in a telephone network. Also, the socket may be used for electrical connections other than those in a telephone system.

Since, in general it will not be possible to provide for unbroken conductors to extend from a multi-wire distribution cable to a subscriber's telephone, some for of junction box has to be provided between them. For example, a junction box may be provided on the subscriber's premises to connect the wiring for which he is responsible to the wire for which the telephone company is responsible. It is desirable that such junction boxes allow connections to be made quickly and easily, and also that environmental protection be provided that will keep the contacts trouble-free for a sufficiently long time. There is, however, a further feature that is desirable. It is desirable that the line be testable, for example, by inserting a probe into the box to test for electrical continuity, and it is desirable that testing can be carried out on circuits either side of the junction box, for example from that junction box toward the subscriber and from junction box towards the central office. If this is to be done, it is necessary (and without sophisticated testing equipment) that the connections provided by the junction box be first broken. Unfortunately, in prior art junction boxes, where connection of more than one pair is provided for, it is the general practice for all connections to be made, and therefore broken, simultaneously. Thus, you loose use of your telephone while your neighbor's is being tested. Furthermore, often a circuit is broken by lifting a drop wire out of an insulation displacement conductor, and this can cause wear.

An example of a prior art connector for telephone conductors is given in U.S. 4,435,034 (Northern Telecom). In that example, all connections are made simultaneously and, although it is not suggested that they ever be broken again, if they were broken they would be broken simultaneously. A connector is disclosed for connecting at least two insulated conductors, for example telephone line conductors, the connector comprising a hollow body and a hollow cap, the cap optionally fitting into the body to form a hollow enclosure. The front of the body has apertures and guides for admission and guidance of conductors thereinto and the cap has insulation displacing terminals set in a top web. When body and cap are pressed together the terminals make contact with the conductive cores of the conductors. Terminal arrangements permit of butt, bridge, and tap connections. A modified form of body permits a tap to be made to a continuous conductor. The cap and body can be provided in a partially assembled or first stage assembly which permits insertion of conductors, the cap and body then being pressed to a fully assembled second stage assembly for connection of the conductors. An amount of sealing material may be injected into the body before assembly. A pumping action, occurs when the body and cap are pressed together, thus forming the material around the conductors. Test ports may be provided in the body so that a probe may make electrical contact with terminals within the cap. No switching is, however, provided for.

With regard to sockets for mating electrical connection, the following prior art may be mentioned. U.S. 4,425,017 (Chan) discloses a plug and socket for use under water, in which the socket contains a hydrophobic gel composition comprising aluminium stearate, liquid paraffin and polyisobutylene. U.S. 4,662,962 (Uken) discloses a termination block sealing member having a continuous layer of insulating gel around its perimeter, through which electrical pins are passed. U.S. 4,718,678 (Vansant) discloses a method of sealing a terminal block in which a layer of gel faced by a gel-impregnated foam is forced over the surface of the block. U.S. 3,972,581 (Oldham) discloses an underwater electrical connector sealing using a semi-mobile compound. German Gebrauchsmuster G8515441 (Raychem) discloses a CATV box having an outlet containing a gel.

DE-B-2816776 discloses an electrical switch having two configurations. In a non-conducting configuration a first conductor is held away from a second conductor because of the unconstrained shape of the first conductor only. In the second, conducting, configuration the first conductor is urged against the second conductor by resilient forces but the second conductor is not urged against the first conductor.

### Summary of the Invention

The present invention provides an electrical switch which comprises:
(a) a resilient first conductor to which a first wire can be electrically connected; and
(b) a resilient second conductor to which a second wire can be electrically connected;

the switch having two stable configurations in the absence of continued interaction by a third body, namely:
(i) a first stable configuration in which the first and second conductors are held in electrical contact at least in part by resilient bias of the first and conductors; and
(ii) a second stable configuration in which the first and second conductors are held apart at least in part by the resilience of the first and second conductors, configuration (ii) being reached from configuration (i) at least in part by relaxation of said resilient bias, and rotation of at least one of said first and second conductors about an axis located between the first and second conductors in configuration (i) and wherein the axis is substantially perpendicular to the force exerted between the first and second conductors when in figuration (i).

The invention also provides a telephone junction box for interconnection of electrical wires, which comprises:
(i) a housing;
(ii) at least four contacts to which four wires, can be connected; and
(iii) at least first and second bi-stable switche (as defined above) within the housing each of which first and second switches can independently make or break a connection between a pair of said contacts, wherein each bi-stable switch is capable of operating in a connected or disconnected condition in the absence of the continued action by a third body.

### Detailed Description of the Invention

The second conductor of the switch defined above is preferably resilient and:
(a) in configuration (i) the first and second conductors are preferably held in electrical contact by resilient bias of the second conductor; and
(b) in configuration (ii) the first and second conductors are preferably held apart by the resilience of the second conductor, configuration (ii) being reached from configuration (i) by relaxation of the second conductor.

The first and second conductors are preferably of substantially similar shape (which includes substantial mirror images) and may conveniently be identical. Thus, the switch may be symmetrical, each conductor performing an identical function. The conductors may each consist essentially of a strip of resilient material, such as spring steel, and may include a protective insulating coating, leaving only contact areas exposed. In a preferred embodiment, the conductors are each stamped from a single sheet of material, and thus have a simple one-piece construction. They may be shaped by bending, etc. for convenient fixture to the housing, for improvement of the way in which they contact one another, and for strength, etc. Furthermore, I prefer that a wiping action be provided as the conductors come into contact, in order that the contact areas be cleaned. The switch may be provided with insulation-displacement means in order that an insulated wire be connectable thereto in a simple, quick fashion. The insulation-displacement means may comprise a slot having sharp edges thereto separated by the correct distance, such than an insulated wire slid laterally therein has its insulation, but not all of its conductive core, cut. Such insulation-displacement means may be integral with the conductor, and again the whole thing may be stamped from sheet metal.

The two conductors may each be generally elongate having one end fixed to some base, for example a part of the housing of the junction box. They may each be so shaped that in their unbiased, relaxed, configuration they do not touch one another. The switch is then in its "open" position. One (or both, preferably both) of the conductors may then be bent, by deforming it against its resilience such that it contacts the other, and contacts it in such a way that the resulting resilient bias is directed towards that other conductor thus maintaining electrical contact. One way in which this can be done is by latching the two conductors and hooking each around the bask of the other. Where the switch is substantially symmetrical (each conductor having substantially the same shape and being deformed in substantially the same way as the other) this latching may be achieved simply by a twisting motion that flips a part of each conductor behind a corresponding part of the other. I prefer that such latching, and ulatching, be easily accomplished by hand or by using a reasily available tool such as a screwdriver, or object such as a coin.

The switch preferably consists of conductors that directly interconnect, and preferably does not incorporate a third conductor whose job it is to bridge two stationary conductors in the "closed" position. Thus, this switch of the invention may be distinguished from the type of switch commonly used in domestic power supplies, etc.

I prefer that the operation of switching involves solely bending (which term includes twisting) of the conductor. Thus, preferably there is no hinging, axial rotation or sliding motion. In this way, the switch may be manufactured cheaply and may be extremely reliable. Preferably the switch includes no moving parts, bending of the conductors excepted, connection of wires to the conductors preferably involving insulation displacement as mentioned above. The switch employed in the junction box of the invention is preferably a two-part switch, particularly as defined above. Reference "two-part" in this context means, of course, that the switching mechanism involves only two parts (the two conductors), and does not predude a base or housing to which they may be attached, nor does it preclude rivets or other fixing means whereby they may be connected to the base or housing.

The switch is particularly useful for connection of telephone subscriber pairs to a distribution network, and several switches may be provided together. I prefer that the switches be provided in pairs, particularly in groups of 1-25, more preferably 1-10, especially 1-6, for example 2 pairs. The switches may be provided in a housing, particularly a two-part housing, one part of which may hold the switches, and the other part for example a lid be removable to enable the switches to be exposed for connection, disconnection, repair or testing. The lid or other removable part, when in position, may aid formation of electrical connections to the switch (for example it may help force wires into insulation-displacement connectors) or it may help to maintain the conductors of the switch in mutual electrical contact. In some embodiments, although not in those presently preferred, such action of a lid etc. may even be necessary for long-term electrical performance of the switches. It is important, however, that the lid be removable without failure of the electrical connections over the time period required to test or otherwise to work on selected ones of them.

I prefer therefore that a lid or other part be removable, and that when removed the switches are exposed and may be independently switched between their "off" and "on" configurations.

It may be desirable that the switches or other parts be further protected from the environment. This may be achieved by provision of a good seal between the two parts of the housing, and around wires that leave the housing through exit ports thereof. I prefer, however, that a sealing material be provided that can itself surround the switches. Such sealing material preferably comprises a gel for example based on a polyurethane or silicone. As an example, a material may be mentioned that is made by gelling curable polyurethane precursor materials in the presence of substantial quantities of mineral oil, vegetable oil or plasticizer or a mixture of two or more of them. Also, a suitaole material may be made by curing reactive silicones with non-reactive extender silicones. The material may contain additives such as moisture scavengers (e.g. benzoyl chloride), antioxidants, pigments and fungicides. The material is preferably electrically-insulating and hydrolytically-stable.

I prefer that the sealing material has a cone penetration value as measured by ASTM D217-68, at 21 degrees C of 100-350 (10⁻¹mm), more preferably 150-350, especially 200-300. Cone penetration is measured on an undisturbed sample using a standard 1:1 scale cone (cone weight 102.5 g, shaft weight 47.5 g) the penetration being measured after 5 seconds. The material preferably has an ultimate elongation as measured by ASTM D638-80 at 21 degrees C of at least 200%, preferably at least 500%, especially at least 750%. In the measurement of elongation, a type 4 die is used to cut the sample, and elongation is measured at 50 cm per minute. I have found that with such preferred materials it is possible easily to encapsulate the switch, and later to remove the sealing material cleanly. Thus, the switches and/or any contacts may be attached to a first part of a housing, and the sealing material fixed to a second part such that when the first and second parts are placed together the sealing material forms an environmental seal around the switches etc., and when the first and second parts are separated the sealing material is removed from the switches. Means may be provided for holding the first and second parts together, preferably so as to hold any such sealing material under compression around the switches etc.

### Brief Description of the Drawings

Figure 1 shows a prior art junction box;
Figures 2a, 2b and 2c show a switch of the invention;
Figure 3 shows a junction box of the invention;
Figure 4 shows a preferred conductor for a switch of the invention; and
Figure 5 shows a junction box of the invention, incorporating a sealing material.

### Detailed Description of the Drawings

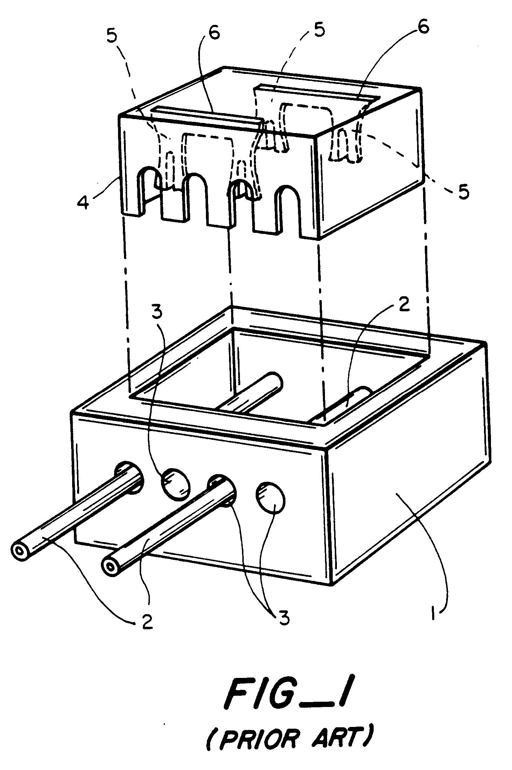

Figure 1 shows a junction box of the type disclosed in U.S. 4,435.,034 (Northern Telecom). It comprises a base 1 into which wires 2 are positioned through holes 3 in one of its walls. A lid 4 is then pressed down onto the base 1 causing insulation-displacement means 5 to cut through insulation of the wires 2 thereby making contact with their conductive cores. Pairs of insulation-displacement means 5 are connected together by a connection 6, and as a result pairs of wires 2 are connected together when base 1 and lid 4 are assembled. A sealing material may be injected into the base when the base and lid are partially assembled. No suggestion is made of this design that it be re-entered, and if it were it is dear that all electrical connections would be broken.

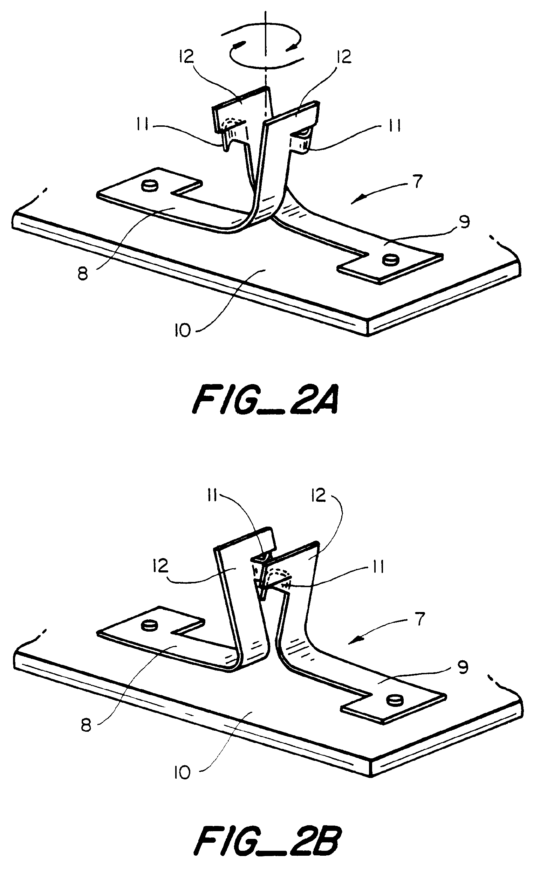

A switch of the invention is illustrated in Figure 2a in the open configuration and in Figure 2b in the closed configuration. The switch comprises a resilient first conductor 8 and a second conductor 9, which is also resilient. The conductors 8, 9 may be fixed to a base 10. Wires to be interconnected by the switch may be connected to the conductors 8, 9 by any suitable means. The conductors have contact portions 11 which can be seen to be apart in Figure 2a and in physical and electrical contact in Figure 2b. I prefer that in the open configuration (Figure 2a) no part of conductor 8 contacts conductor 9, although this need not be so if either conductor is partially insulated. In the open configuration the conductors are preferably fully relaxed, i.e. not biased against their resilience. This need not however be the case since a conductor could be biased against some stop means. In either case, it can be seen that the resilience of the conductors is holding them apart since deformation against their resilience would be required to cause them to come into contact.

The switch may be operated by a simple rotating motion applied for example to extensions 12 (or other parts) provided for that purpose. Rotation as indicated by the arrows in Figure 2a causes each contact 11 to be flipped behind the other. This can be done by means of a screwdriver etc. placed between extension 12. The contacts 11 may also act as a stop on which the end of the screwdriver may rest. The two conductors 8, 9 are now latched together and are deformed against their resilience such that they are held in mutual electrical contact by their resilient bias. The reverse process, namely opening of the switch, is achieved (at least in part, and generally after some twisting of the conductors) by relaxation of the resilient bias. As the contacts 11 come into engagement, some wiping motion preferably occurs thereby cleaning them.

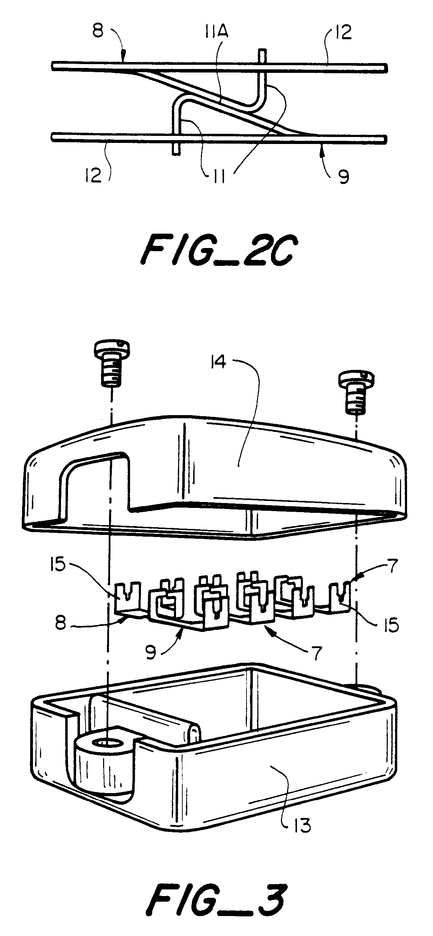

Figure 2c shows a preferred closed switch in plan view. The contacts 11 can be seen to be turned back to an orientation substantially perpendicular to the extension 12. Also, the contacts meet along extended length 11A, rather than at what would appear a point in plan view. This ensures better contact and is likely to result in more wiping action.

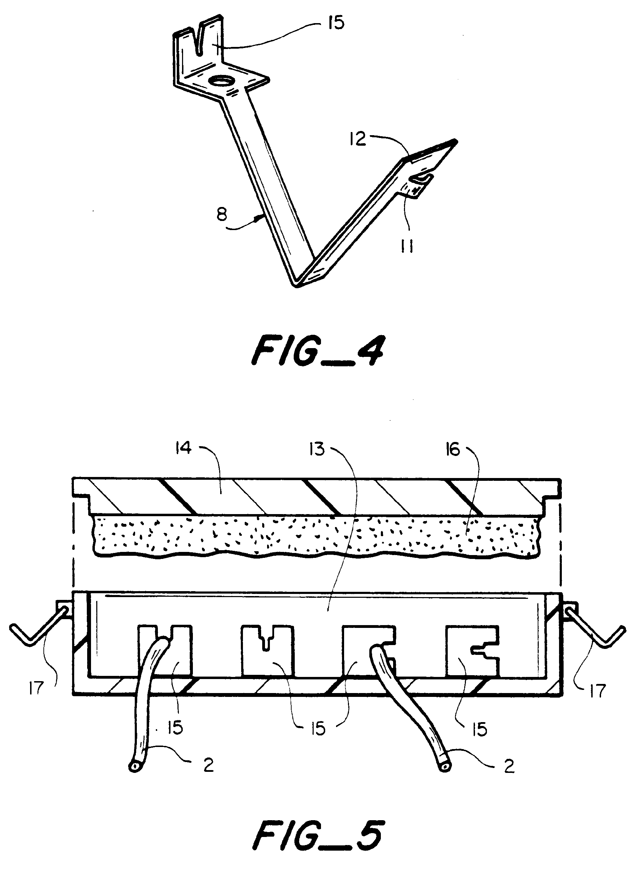

Figure 3 shows a design of junction box incorporating four switches of the invention. The box may have means such as an internal channel for holding and providing strain relief to an incoming cable that is to be connected via the switches to several drop wires. The box comprises a base 13, housing the switches 7, and a lid 14. The base and lid may be held together by bolts as illustrated. The switches include insulation-displacement means 15 by means of which insulated wires may be connected to the conductors 8, 9. The conductors and insulation-displacement means are preferably stamped from a single piece of sheet metal. It can be seen that the switch can be opened and closed without disturbing the connection of drop wires to the insulation displacement connectors.

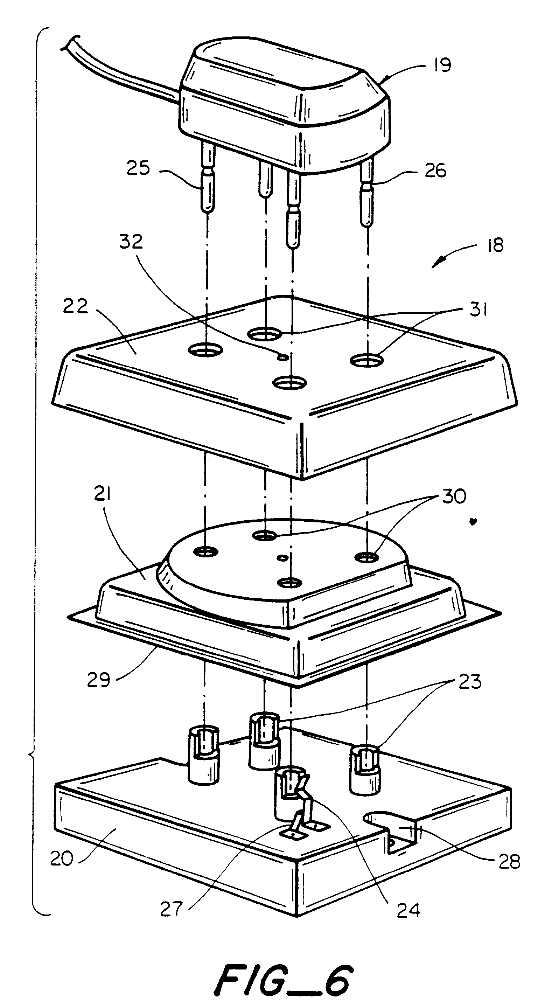

Figure 4 shows an alternative design of conductor that may be used as conductors 8 and/or 9 in the switch or box of the invention. Figure 4 shows the conductor relaxed, and when installed on some bases it may become tensioned by the limb to which the arrow 8 points being bent to a substantially horizontal position. The conductor includes a contact 11, a part 12 to aid switching, and insulation-displacement means 15. An advantage of the design illustrated in Figure 4 over that illustrated in Figures 2a and 2b is that the bending motion required to open or close the switch can be limited to a small part of the conductor, for example the base of the "V" the angle of which will simply vary. In the design of Figures 2a and 2b, the horizontal portions of the conductors may lift off the base, which may be undesirable.

A junction box is shown in Figure 5 that incorporates a sealing material such as a gel. The box comprises a base 13 and a lid 14 to which the sealing material 16 is attached.

A sealing material may additionally or alternatively be provided on the base. Parts of the switch to be encapsulated (for example the insulation-displacement means 15 illustrated, and/or the conductors) are exposed when the lid is removed, the lid taking the sealing material cleanly with it. The insulation displacement means may comprise slots that are horizontal (i.e. perpendicular or oblique to the direction of removal of the lid), as shown at the two righthand instances in the figure, to avoid any tendency for removal of lid and material 16 to cause removal of wires 2. Other means may be provided to prevent such removal, for example some form of latch that traps the wires. Also, a portion of a sealing material 16 that is to encapsulate the means 15 may be separate from that which is to encapsulate the conductors 8, 9 of the switch. In that case, the conductors alone can be exposed for switching. The box may include some means to aid insertion of wires 2 into insulation - displacement means 15, although this may be done by hand or with some simple tool such as a screwdriver. Such means may be provided as part of the lid, such that when the lid is closed it forces the wires into the correct position. The box may have some means, such as hooks 17 to retain the lid and/or keep the sealing material 16 under compression around the switches.

## Claims

1. An electrical switch (7) which comprises:
(a) a resilient first conductor (8) to which a first wire can be electrically connected; and
(b) A resilient conductor (9) to which a second wire can be electrically connected;
the switch having two stable configurations in the absence of continued interaction by a third body, namely:
(i) a first stable configuration in which the first and second conductors (8,9) are held in electrical contact at least in part by the resilient bias of the first and second conductors; and
(ii) a second stable configuration in which the first and second conductors (8,9) are held apart at least in part by the resilience of the first and second conductors, configuration (ii) being reached from configuration (i) at least in part by the relaxation of said resilient bias and rotation of at least one of said first and second conductors about an axis located between the first and second conductors in configuration (i) and wherein the axis is substantially perpendicular to the force exerted between the first and second conductors when in configuration (i).

2. A switch according to claim 1 in which the first and second conductors (8,9) are of substantially similar shape.

3. A switch according to claim 2 in which the first and second conductors (8,9) each consists essentially of a strip of resilient material.

4. A switch according to any one of the preceding claims, in which in configuration (ii) the first conductor (8) is substantially unbiased against said resilience.

5. A switch according to any one of the preceding claims, in which change between configurations (i) and (ii) is achieved solely by bending of the first conductor (8) and optionally also the second conductor (9).

6. A switch according to any one of the preceding claims, which additionally comprises insulation-displacement means (15) by means of which an insulated wire can be electrically-connected to at least one of said conductors (8,9).

7. A switch according to claim 6 in which an insulation-displacement means (15) is an integral part of each conductor (8,9), each conductor being stamped from a single piece of metal.

8. A telephone junction box for interconnection of electrical wires, which comprises:
(i) a housing (13,14);
(ii) at least four contacts to which four wires can be connected; and
(iii) at least a first and second bi-stable switch (7) as defined in any one of claims 1 to 7 within the housing each of which first and second switches (7) can independently make and break a connection between a pair of contacts wherein each bi-stable switch (7) is capable of operating in a connected or a disconnected condition in the absence of the continued action by a third body.

9. A junction box according to claim 8, having a sealing material (16) that can form an environmental seal around each switch.

10. A junction box according to claim 9, in which the housing comprises:
(a) a first part (13) to which the contacts and the switches are attached; and
(b) a second part (14) that together with the first part forms an enclosure around the contacts and the switches,
the sealing material (16) being fixed to the second part (14) such that when the first and second parts are placed together the sealing material forms an environmental seal around each switch, and when the first and second parts are separated the sealing material is substantially removed from the switches.

11. A junction box according to claim 10, in which the sealing material (16) comprises a gel.

12. A junction box according to claim 11, in which the gel comprises a material having a cone penetration value as measured by ASTM D217-68 at 21°C of 100-350 (10⁻¹mm) and an ultimate elongation as measured by ASTM D638-80 at 21°C of at least 200%.

13. A junction box according to claim 12, which additionally comprises means (17) for maintaining the sealing material under compression around the switches.

## Patentansprüche

1. Elektrischer Schalter (7), der aufweist:
(a) einen federnden ersten Leiter (8), mit dem ein erster Draht elektrisch verbunden werden kann; und
(b) einen federnden zweiten Leiter (9), mit dem ein zweiter Draht elektrisch verbunden werden kann;
wobei der Schalter in Abwesenheit von fortgesetztem Einwirken durch einen dritten Körper zwei stabile Konfigurationen hat, und zwar:
(i) eine erste stabile Konfiguration, in der der erste und der zweite Leiter (8, 9) mindestens teilweise durch die federnde Vorspannung des ersten und des zweiten Leiters in elektrischem Kontakt gehalten werden; und
(ii) eine zweite stabile Konfiguration, in der der erste und der zweite Leiter (8, 9) mindestens teilweise durch die Federwirkung des ersten und des zweiten Leiters auseinandergehalten werden, wobei Konfiguration (ii) aus Konfiguration (i) heraus mindestens teilweise durch das Nachgeben der federnden Vorspannung und Drehen von mindestens einem von dem ersten und dem zweiten Leiter um eine Achse erreicht wird, die zwischen dem ersten und dem zweiten Leiter in Konfiguration (i) liegt, und wobei die Achse im wesentlichen senkrecht zu der Kraft ist, die zwischen dem ersten und dem zweiten Leiter in Konfiguration (i) ausgeübt wird.

2. Schalter nach Anspruch 1, wobei der erste und der zweite Leiter (8, 9) im wesentlichen ähnliche Gestalt haben.

3. Schalter nach Anspruch 2, wobei der erste und der zweite Leiter (8, 9) jeweils im wesentlichen aus einem Streifen aus federndem Material bestehen.

4. Schalter nach einem der vorhergehenden Ansprüche, wobei in Konfiguration (ii) der erste Leiter (8) gegen die Federwirkung im wesentlichen nicht vorgespannt ist.

5. Schalter nach einem der vorhergehenden Ansprüche, wobei eine Änderung zwischen den Konfigurationen (i) und (ii) nur durch Biegen des ersten Leiters (8) und falkultativ auch des zweiten Leiters (9) erreicht wird.

6. Schalter nach einem der vorhergehenden Ansprüche, der zusätzlich eine Isolierungsverlagerungseinrichtung (15) aufweist, durch die ein isolierter Draht mit mindestens einem der Leiter (8, 9) elektrisch verbunden werden kann.

7. Schalter nach Anspruch 6, wobei eine Isolierungsverlagerungseinrichtung (15) ein integraler Teil jedes Leiters (8, 9) ist, wobei jeder Leiter aus einem einzigen Metallstück gestanzt ist.

8. Telefonanschlußdose zum Verbinden von elektrischen Drähten miteinander, die aufweist:
(i) ein Gehäuse (13, 14);
(ii) mindestens vier Kontakte, mit denen vier Drähte verbunden werden können; und
(iii) mindestens einen ersten und einen zweiten bistabilen Schalter (7) nach einem der Ansprüche 1 bis 7 in dem Gehäuse, wobei der erste und der zweite Schalter (7) jeweils unabhängig eine Verbindung zwischen einem Paar von Kontakten herstellen und unterbrechen können, wobei jeder bistabile Schalter (7) fähig ist, in Abwesenheit der fortgesetzten Einwirkung durch einen dritten Körper in einem verbundenen oder einem getrennten Zustand zu arbeiten.

9. Anschlußdose nach Anspruch 8, die ein Dichtmaterial (16) hat, das um jeden Schalter herum eine Abdichtung gegenüber der Umgebung bilden kann.

10. Anschlußdose nach Anspruch 9, wobei das Gehäuse aufweist:
(a) ein erstes Teil (13), an dem die Kontakte und die Schalter angebracht sind; und
(b) ein zweites Teil (14), das gemeinsam mit dem ersten Teil ein Gehäuse um die Kontakte und die Schalter herum bildet,
wobei das Dichtmaterial (16) an dem zweiten Teil (14) derart befestigt ist, daß, wenn das erste und das zweite Teil zusammengebracht sind, das Dichtmaterial um jeden Schalter herum eine Abdichtung gegenüber der Umgebung bildet und, wenn das erste und das zweite Teil voneinander getrennt sind, das Dichtmaterial von den Schaltern im wesentlichen entfernt ist.

11. Anschlußdose nach Anspruch 10, wobei das Dichtmaterial (16) ein Gel aufweist.

12. Anschlußdose nach Anspruch 11, wobei das Gel ein Material aufweist, das einen Konuspenetrationswert, gemessen nach ASTM D217-68, bei 21 °C von 100-350 (10⁻¹ mm) und eine Bruchdehnung, gemessen nach ASTM D638-80, bei 21 °C von mindestens 200 % hat.

13. Anschlußdose nach Anspruch 12, die zusätzlich eine Einrichtung (17) aufweist, um das Dichtmaterial um die Schalter herum unter Kompression zu halten.

## Revendications

1. Commutateur électrique (7) qui comporte :
(a) un premier conducteur élastique (8) auquel un premier fil peut être connecté électriquement ; et
(b) un second conducteur élastique (9) auquel un second fil peut être connecté électriquement ;
le commutateur ayant deux configurations stables en l'absence d'une interaction prolongée d'un troisième corps, à savoir :
(i) une première configuration stable dans laquelle les premier et second conducteurs (8, 9) sont maintenus en contact électrique au moins en partie par la sollicitation élastique des premier et second conducteurs ; et
(ii) une seconde configuration stable dans laquelle les premier et second conducteurs (8, 9) sont maintenus écartés au moins en partie par l'élasticité des premier et second conducteurs, la configuration (ii) étant atteinte à partir de la configuration (i) au moins en partie par le relâchement de ladite sollicitation élastique, et une rotation d'au moins l'un desdits premier et second conducteurs autour d'un axe situé entre les premier et second conducteurs dans la configuration (i), et dans laquelle l'axe est sensiblement perpendiculaire à la force exercée entre les premier et second conducteurs lorsqu'ils sont dans la configuration (i).

2. Commutateur selon la revendication 1, dans lequel les premier et second conducteurs (8, 9) sont d'une forme sensiblement similaire.

3. Commutateur selon la revendication 2, dans lequel les premier et second conducteurs (8, 9) sont constitués essentiellement chacun d'une bande de matière élastique.

4. Commutateur selon l'une quelconque des revendications précédentes, dans lequel, dans la configuration (ii), le premier conducteur (8) n'est pratiquement pas sollicité contre ladite élasticité.

5. Commutateur selon l'une quelconque des revendications précédentes, dans lequel un changement entre les configurations (i) et (ii) est réalisé uniquement par une flexion du premier conducteur (8) et optionnellement, aussi, du second conducteur (9).

6. Commutateur selon l'une quelconque des revendications précédentes, qui comporte additionnellement des moyens (15) de déplacement d'isolant à l'aide desquels un fil isolé peut être connecté électriquement à au moins l'un desdits conducteurs (8, 9).

7. Commutateur selon la revendication 6, dans lequel un moyen (15) de déplacement d'isolant fait partie intégrante de chaque conducteur (8, 9), chaque conducteur étant découpé dans une pièce de métal unique.

8. Boîte de jonction téléphonique pour une interconnexion de fils électriques, qui comporte :
(i) un boîtier (13, 14) ;
(ii) au moins quatre contacts auxquels quatre fils peuvent être connectés ; et
(iii) au moins des premier et second commutateurs bistables (7) tels que définis dans l'une quelconque des revendications 1 à 7, à l'intérieur du boîtier, premier et second commutateurs (7) pouvant chacun, indépendamment, fermer et ouvrir une connexion entre deux contacts, chaque commutateur bistable (7) étant capable de travailler dans un état connecté ou déconnecté en l'absence de l'action prolongée d'un troisième corps.

9. Boîte de jonction selon la revendication 8, comportant une matière (16) d'obturation étanche qui peut former un joint étanche au milieu ambiant autour de chaque commutateur.

10. Boîte de jonction selon la revendication 9, dans laquelle le boîtier comporte :
(a) une première partie (13) à laquelle les contacts et les commutateurs sont fixés ; et
(b) une seconde partie (14) qui forme avec la première partie une enceinte autour des contacts et des commutateurs,
la matière d'obturation étanche (16) étant fixée à la seconde partie (14) de manière que, lorsque les première et seconde parties sont assemblées, la matière d'obturation étanche forme un joint étanche au milieu ambiant autour de chaque commutateur, et lorsque les première et seconde parties sont séparées, la matière d'obturation étanche soit sensiblement enlevée des commutateurs.

11. Boîte de jonction selon la revendication 10, dans laquelle la matière d'obturation étanche (16) est constituée d'un gel.

12. Boîte de jonction selon la revendication 11, dans laquelle le gel comprend une matière ayant une valeur de pénétration de cône, telle que mesurée selon la norme ASTM D217-68 à 21°C, de 100-350 (10⁻¹ mm) et un allongement à la rupture, tel que mesuré selon la norme ASTM D638-80 à 21°C, d'au moins 200 %.

13. Boîte de jonction selon la revendication 12, qui comporte additionnellement des moyens (17) destinés à maintenir la matière d'obturation étanche sous compression autour des commutateurs.
